(19) Europäisches Patentamt
European Patent Office
Office européen des brevets

(11) **EP 3 425 617 A1**

(12) **EUROPEAN PATENT APPLICATION**

(43) Date of publication:
**09.01.2019 Bulletin 2019/02**

(51) Int Cl.:
*G09G 3/00* (2006.01)      *G03B 21/00* (2006.01)
*G09G 3/20* (2006.01)      *G09G 5/02* (2006.01)
*G09G 5/10* (2006.01)      *H04N 5/74* (2006.01)
*H04N 9/31* (2006.01)

(21) Application number: **18181941.8**

(22) Date of filing: **05.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2017   JP 2017134157**

(71) Applicant: **Ricoh Company, Limited
Tokyo 143-8555 (JP)**

(72) Inventor: **KISHI, Yumiko
Ohta-ku, Tokyo 143-8555 (JP)**

(74) Representative: **Watkin, Timothy Lawrence Harvey
Marks & Clerk LLP
Fletcher House
The Oxford Science Park
Heatley Road
Oxford OX4 4GE (GB)**

(54) **IMAGE PROCESSING APPARATUS, DISPLAY SYSTEM, IMAGE PROCESSING METHOD, AND PROGRAM**

(57)   An image processing device (10) includes an obtaining unit (11) and a change unit (12). The obtaining unit (11) receives a background brightness of an image projected onto a transmission and reflection member. The change unit (12) generates control data for controlling display unit (13). The change unit (12) is operative to change an original display color of at least a portion of the image within a chromaticity range corresponding to the original display color of the portion of the image, according to the background brightness. A color difference between the original display color and a display color changed by the change unit (12) when the background brightness is greater than or equal to a predetermined threshold value, is greater than a color difference when the background brightness is less than the predetermined threshold value.

FIG. 1

EP 3 425 617 A1

**Description**

BACKGROUND

Technical Field

Embodiments of the present disclosure relate to an image processing device, a display system, an image processing method, and program.

Background Art

Head-up displays (HUDs) mounted on mobile devices such as automobiles and aircraft are known that directly display information in the field of view of a user. In such HUDs, light for projecting a display image is reflected by a combiner to generate a virtual image, and a driver visually recognizes the generated virtual image. In this configuration, a background such as a road surface is viewable through the generated virtual image.

JP-2015-178297-A describes the technology to identify a color component with the highest brightness (light intensity) among red, green, and blue (RGB) components in an image captured by a front camera of the mobile device and increase the brightness of two other color components (i.e. the color components other than the identified color component). This technology improves the visibility of content displayed by the HUD.

In the technology described in JP-2015-178297-A, the color tone of the displayed content image might change from the original color tone due to the increase in the brightness of the RGB components, and this might cause the user to misunderstand the meaning of an content image (that is, an image including information content) virtually displayed by the HUD. For example, when an image originally displayed in red to represent prohibition or warning is displayed in another color other than red, the user might misunderstand the original meaning of the content image.

The present disclosure has an object to improve the visibility of an image and enables the user to appropriately understand the meaning of the image.

SUMMARY

In one aspect of this disclosure, there is provided an improved

An image processing device includes an obtaining unit and a change unit. The obtaining unit receives a background brightness of an image projected onto a transmission and reflection member. The change unit generates control data for controlling display unit. The change unit is operative to change an original display color of at least a portion of the image within a chromaticity range corresponding to the original display color of the portion of the image, according to the background brightness. A color difference between the original display color and a display color changed by the change unit when the background brightness is greater than or equal to a predetermined threshold value, is greater than a color difference when the background brightness is less than the predetermined threshold value.

In another aspect of this disclosure, there is provided an improved a display unit including at least one light source to emit light for projecting an image; a sensor to obtain a background brightness of the image projected onto a transmission and reflection member; and a calculation unit. The calculation unit is arranged to receive data from the sensor and generate control data for controlling the display unit. The calculation unit includes an obtaining unit to obtain from a sensor data indicating background brightness; and a change unit for generating control data for controlling a display unit to display an image. The change unit is operative to change an original display color of at least a portion the image within a range corresponding to the original display color of the portion of the image when the background brightness is greater than a predetermined threshold value. The display unit causes the light source to project the image with a color changed by the change unit onto the transmission and reflection member.

In still another aspect of this disclosure, there is provided an improved image processing method including receiving a background brightness of an image projected onto a transmission and reflection member; and generating control data for controlling display unit to change an original display color of at least a portion of the image within a chromaticity range corresponding to the original display color of the portion of the image, according to the background brightness. A color difference between the original display color and a display color changed by the change unit when the background brightness is greater than or equal to a predetermined threshold value, is greater than a color difference when the background brightness is less than the predetermined threshold value.

In still another aspect of this disclosure, there is provided an improved carrier medium comprising program instructions operative to cause a processor to perform the image processing method.

According to the embodiments of the present disclosure, the visibility of the image improves, and a user can appropriately understand the meaning of the image.

BRIEF DESCRIPTION OF THE DRAWINGS

The aforementioned and other aspects, features, and advantages of the present disclosure will be better understood by reference to the following detailed description when considered in connection with the accompanying drawings, wherein:

FIG. 1 is an illustration of an example configuration of a display system according to an embodiment of the present disclosure;

FIG. 2 is a block diagram of an example hardware configuration of a display device according to an embodiment of the present disclosure;

FIG. 3 is a block diagram of an example functional configuration of the display device of FIG. 1;

FIG. 4 is a flowchart of a first processing example of the display device of FIG. 1;

FIG. 5 is a graph that represents the relationship between a display luminance and a background luminance according to an embodiment of the present disclosure;

FIG. 6 is a chromaticity diagram for describing changes in color of content when the content is white;

FIG. 7 is a graph for describing an amount of change in display color of content when the content is of a color other than white;

FIG. 8 is a chromaticity diagram for describing a direction in which a color changes when the content is of a color other than white;

FIG. 9 is an illustration of an example of a display screen of the display device according to an embodiment of the present disclosure;

FIG. 10 is a flowchart of a second processing example of the display device of FIG. 1; and

FIG. 11 is a chromaticity diagram for describing changes in display color with background chromaticity according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

Hereinafter, a description is given of several embodiments of the present disclosure with reference to the drawings.

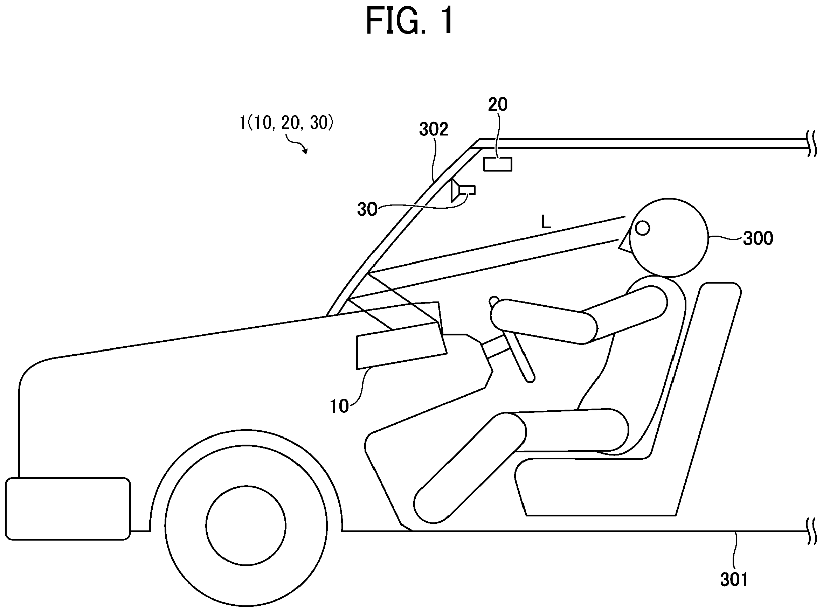

A description is given of a system configuration of a display system 1 according to an embodiment of the present disclosure, referring to FIG. 1.

FIG. 1 is an illustration of an example configuration of a display system 1 according to an embodiment of the present disclosure.

The display system 1 according to the embodiments of the present disclosure is mounted on a mobile device such as a vehicle, an aircraft, and a ship. The display system 1 includes a display device 10 as an image processing device, an illuminance sensor 20, and a camera 30.

Hereinafter, the cases in which the display system 1 is mounted on a vehicle are described according to an example of the present disclosure. In some examples, the display system 1 is applicable in other mobile devices, such as ones which are not in vehicles.

The display device 10 is an example of a device such as a head up display (HUD) and a head mount display (HMD).

In the following description, the display device 10 is an example of the HUD. The display device 10 is disposed, for example, in the dashboard of a driver's vehicle 301.

The projection light L, which is the light for projecting an image, that is emitted from the display device 10 is reflected by a front windshield 302 that serves as a light transmission and reflection member, and is redirected towards a driver 300.

Note that the term "transmission and reflection member" indicates a member that transmits a portion of the incident light and reflects at least some of the remaining incident light. Accordingly, the image is projected onto the front glass 302. In the case that the image includes information content (i.e. it is a content image, such as a navigation image), the driver 300 can visually recognize the content image as a virtual image. Hereinafter, the content image is referred to simply as content.

Note that a combiner that serves as a light transmission and reflection member may be disposed on the inner wall of the front windshield 302. Accordingly, the driver 300 visually recognizes a virtual image formed by the projection light L that is reflected by the combiner.

In the following description, the cases where a laser beam source (light source) is used as the light source of the display device 10 are described. However, no limitation is intended therein. Alternatively, the display device 10 may be a display device including a liquid crystal display (LCD).

The illuminance sensor 20 is, for example, an illuminometer or a luminance meter. The illuminance sensor 20 obtains at least one value indicative of the brightness such as the luminance and the illuminance in a portion of the background comprising] the position where the virtual image of the content is generated, or proximate (e.g. in an area surrounding) the position where the virtual image is generated.

The camera 30 is a camera for photographing an image ahead of the mobile device.

The illuminance sensor 20 and the camera 30 may be provided, for example, in the upper portion of the front windshield 302.

In the first embodiment, the display system 1 includes at least one of the illuminance sensor 20 and the camera 30.

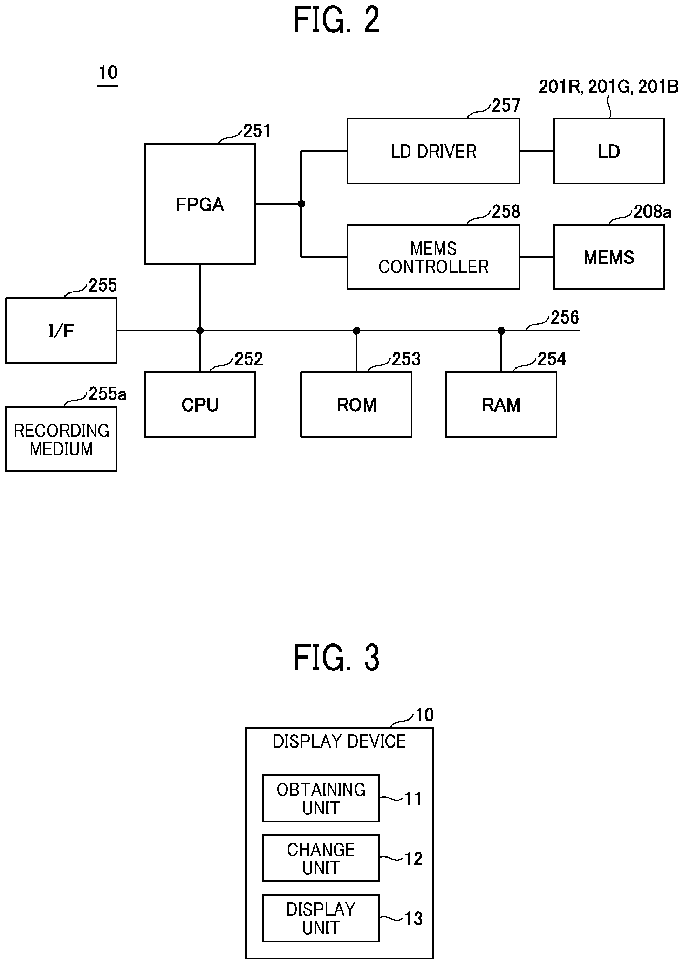

Next, a hardware configuration of the display device 10 is described according to an embodiment of the present disclosure with reference to FIG. 2.

FIG. 2 is a block diagram of an example hardware configuration of the display device 10 according to an embodiment of the present disclosure.

The display device 10 includes a field programmable gate array (FPGA) 251, a central processing unit (CPU) 252, a read-only memory (ROM) 253 as a memory, a random access memory (RAM) 254, an interface (I/F) 255, a bus line 256, a laser diode (LD) driver 257, and a micro-electromechanical systems (MEMS) controller 258.

The FPGA 251 uses the LD driver 257 to control the operation of laser beam sources (light sources) 201R, 201G, and 201B of a light source unit 220. Moreover, the FPGA 251 uses the MEMS controller 258 to control the operation of a MEMS device 208a of an optical scanner of the display device 10.

The CPU 252 controls the operations of the display device 10.

The ROM 253 stores various kinds of programs such as an image processing program that is executed by the CPU 252 to control the operation of the display device 10.

The RAM 254 is mainly used as a working area in which the CPU 252 executes a program.

The I/F 255 allows the display device 10 to communicate with an external controller such as a controller area network (CAN) of the vehicle 301. For example, the interface 255 is connected to a vehicle navigation device and various kinds of sensor device through the CAN of the vehicle 301. Moreover, the I/F 255 is connected to the camera 30 that captures an image in front including an image to be displayed by the display device 10 and its background image through the front windshield 302. Further, the I/F 255 is connected to the illuminance sensor 20 that detects the brightness (luminance and/or illuminance) and chromaticity of the environmental light at and/or proximate to the display image.

The display device 10 reads or writes data from and to a recording medium 255a via the I/F 255. Examples of the recording medium 255a include a flexible disc, a compact disc (CD), a digital versatile disc (DVD), a secure digital (SD) memory card, and a universal serial bus (USB) memory.

First Embodiment

Next, a functional configuration of the display device 10 is described according to a first embodiment of the present disclosure, referring to FIG. 3. FIG. 3 is a block diagram of a functional configuration of the display device 10 according to the first embodiment of the present disclosure.

The display device 10 includes an obtaining unit 11, a change unit 12 (the obtaining unit 11 and the change unit 12 constitutes a calculation unit), and a display unit 13 for generating and transmitting the light L. Each of these functional units is implemented by processes executed by the CPU 252 according to one or more programs installed on the display device 10. At any time, the display device 10 defines an upper limit of the luminance values at which the display device 10 enables any content of the image to be displayed.

The obtaining unit 11 obtains the brightness of the background that is viewable through a virtual image of the content captured by the illuminance sensor 20 or the camera 30. In the following description, the luminance is used to describe the brightness for example. In some examples, the illuminance may be used to describe the brightness.

The change unit 12 changes the luminance of the content (content luminance) to a different luminance level (hereinafter, referred to as a comfortable luminance (comfortable brightness); the comfortable luminance may be pre-set or may be set based upon user input) that enables the user to easily recognize the contents and prevents the contents from being too bright for the user when the background luminance (the above-described brightness of the background) obtained by the obtaining unit 11 is not greater than or equal to a predetermined threshold value.

A given portion of the image may be one of several possible original display colors. Different possibilities for the original display color of a portion of the image (that is a chromaticity) are associated with respective ranges of chromaticity, which may be different from each other. Further, when the background luminance obtained by the obtaining unit 11 is greater than or equal to a predetermined threshold value, the change unit 12 changes the luminance of the content to the upper limit of the luminance values at which the display device 10 enables the content to be displayed, and also changes the display color (chromaticity) of the content within the chromaticity range corresponding to the original display color of the content.

The display unit 13 displays the content with the luminance and display color changed by the change unit 12.

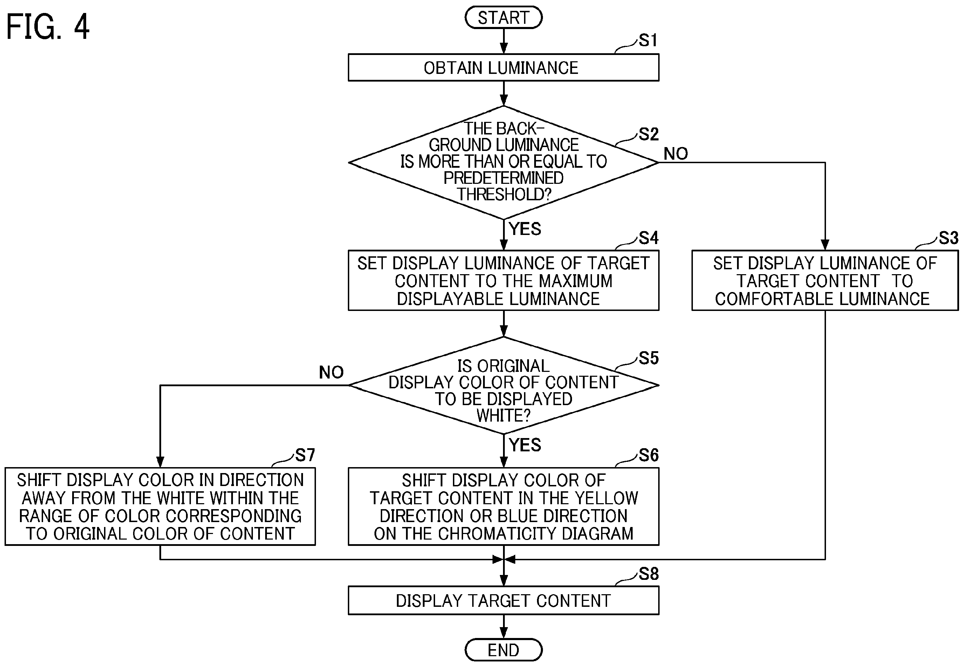

Next, the processing of the display device 10 is described according to the first embodiment of the present disclosure, referring to FIG. 4.

FIG. 4 is a flowchart of the processing of the display device 10 according to the first embodiment of the present disclosure. Note that the processing of FIG. 4 may be performed at a periodic timing, for example. Hereinafter, each content to be displayed with at least one of the luminance and the chromaticity changed by the display device 10 is referred to as a target content.

In step S1, the obtaining unit 11 obtains a background luminance from the illuminance sensor 20 or the camera 30. When using the camera 30, the obtaining unit 11 obtains the background luminance from an image captured by the camera 30.

Subsequently, the change unit 12 determines whether the background luminance is greater than or equal to a threshold value (step S2).

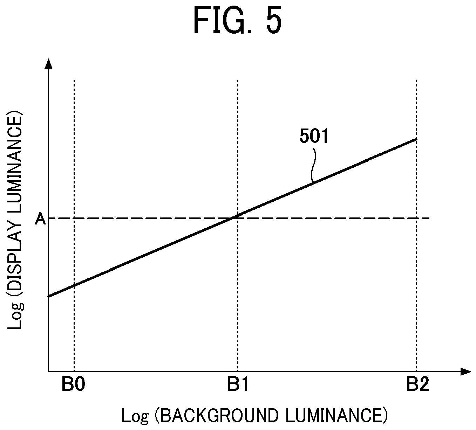

FIG. 5 is an illustration of the predetermined threshold value of the background luminance. Both axes in FIG. 5 are logarithmic. In FIG. 5, the vertical axis denotes the logarithm (log) of the display luminance of content, and the horizontal axis denotes the log of the background luminance. As illustrated in FIG. 5, a comfortable luminance 501 linearly changes with the background luminance.

In FIG. 5, B0 and B2 respectively denote the lower limit and the upper limit of the background luminance to which the display device 10 is adaptable. Further, B1 denotes a background luminance when the comfortable luminance 501 exceeds the upper limit A of the display luminance values at which the display device 10 enables the content to be displayed. The above-described predetermined threshold value may be set to the value B1 in FIG. 5.

For example, when the display device 10 includes a laser beam source, the upper limit of the luminance values at which the display device 10 enables the content to be displayed changes with the environmental factors such as temperature, which means that the predetermined threshold value also changes with temperature. In view of such circumstances, the change unit 12 detects an ambient temperature around the laser beam source using, for example, a temperature sensor to determine the predetermined threshold value based on the detected temperature.

When the background luminance is not greater than or equal to the predetermined threshold value (No in step S2), the change unit 12 changes the display luminance of a target content, to a comfortable luminance (step S3), and the processing proceeds to step S8.

In such a process, the change unit 12 increases the display luminance of the content in accordance with an increase in background luminance (as the background is brighter), to obtain improved visibility of the content displayed by the display device 10. When the display luminance of the content is much higher than the background luminance, the displayed content is too bright for the user and the user feels uncomfortable. To avoid such a situation, the change unit 12 changes the display luminance of the content to the comfortable luminance. The change unit 12 may merely adjust the luminance of the content to the comfortable luminance when such an adjustment enables the content to be displayed with the visibility obtained.

In some examples, the change unit 12 preliminarily stores a table in which the comfortable luminance values are associated with the background luminance values, in a memory so as to obtain a comfortable luminance corresponding to each background luminance. Alternatively, the change unit 12 may obtain a comfortable luminance using a prescribed formula in which the background luminance is variable (a parameter).

When the background luminance is greater than or equal to the predetermined value (Yes in step S2), the change unit 12 changes the display luminance of the target content, to the upper limit value of the luminance values (the upper limit A in FIG. 5) at which the display device 10 enables the content to be displayed (step S4).

Subsequently, the change unit 12 determines whether the original display color of the target content is white (step S5).

In this case, the original display color of the content refers to a respective color preset for each possible type of content.

When the original display color of the target content is white (Yes in step S5), the change unit 12 changes the display color of the target content in the yellow direction or the blue direction on the chromaticity diagram (step S6), and the processing proceeds to step S8.

Note that changing the white target content in the yellow to blue direction is more acceptable in terms of human perception than changing the white target content in the red to green direction.

In other words, yellowish white and bluish white are more acceptable in terms of human perception than reddish white and greenish white. Accordingly, the change unit 12 may mainly change the luminance of, for example, the blue component when the content is white, so as to cause a color difference between the original display color and the color changed by the change unit to display the content.

In this case, the change unit 12 changes the display color of content such that $\Delta YB$ is greater than $\Delta YR$ ($\Delta YB > \Delta YR$) and $\Delta YB$ is greater than $\Delta YG$ ($\Delta YB > \Delta YG$) when the amounts of change in luminance of red, green, and blue are denoted by $\Delta YR$, $\Delta YG$, and $\Delta YB$, respectively. This enables improved visibility and a relatively natural color change of content to be obtained.

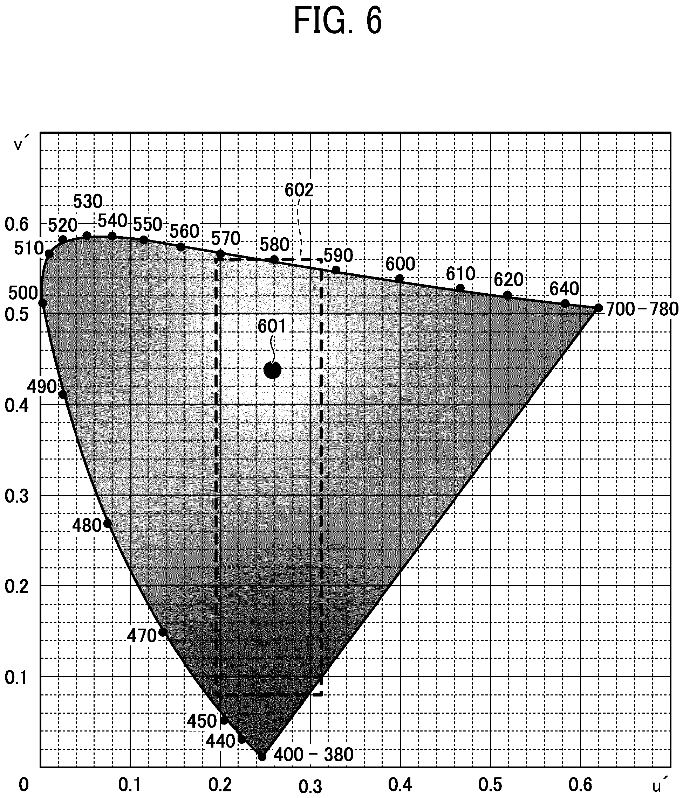

FIG. 6 is a chromaticity diagram that represents changes in colors when the content is white. The chromaticity diagram of FIG. 6 is the International Commission on Illumination/Commission International de L'Eclairage (CIE) 1976 UCS chromaticity diagram.

However, the chromaticity diagram employed by the embodiment is not limited to the CIE 1976 UCS chromaticity diagram, and any chromaticity diagram may be used.

In the CIE 1976 UCS chromaticity diagram, the scale is calibrated such that the difference in perception of color at the same brightness is substantially proportional to the geometric distance all over the chromaticity diagram.

The chromaticity values are not limited to the values on the CIE 1976 UCS chromaticity diagram and may be on another type of chromaticity diagram. Further, the color difference may be obtained from values on chromaticity diagrams other than the CIE 1976 UCS chromaticity diagram. For example, the chromaticity diagram may be the L*a*b* color space chromaticity diagram, and the chromaticity values may be on the L*a*b* color space chromaticity diagram. The color difference may be obtained from values on the L*a*b* color space chromaticity diagram.

In step S6, the change unit 12 changes the display color of content from the white 601 of FIG. 6 in the yellow direction or the blue direction within a relatively wide range 602. In this case, the change unit 12 may change the display color of content from the white 601 to a color farther (i.e. at a position farther away) from the white 601 in the yellow direction or the blue direction on the chromaticity diagram as the background luminance increases.

When the original display color of the target content is not white (No in step S5), the change unit 12 changes the display color of the target content in a direction away from white within the (color or chromaticity) range of the original display color (step S7).

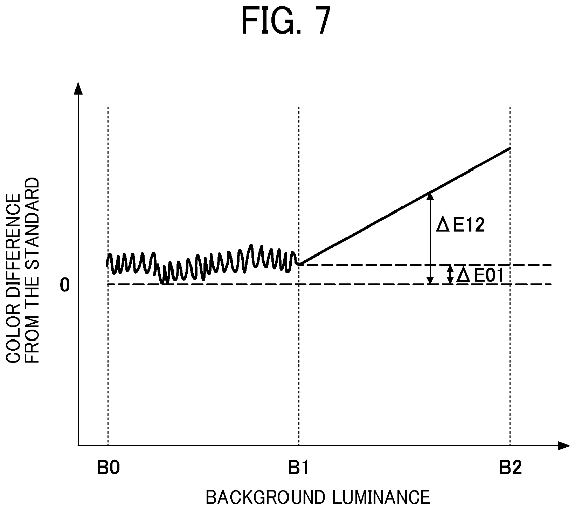

FIG. 7 is a graph that represents changes in display color of content when the content is of a color other than white.

The color difference ΔE between the original display color (u0', v0') of the content and the changed color (u1', v1') is expressed by the following expression (1). When a plurality of colors is included in the original display color of one item of content, (u0', v0') may be defined as the average value of the original display colors of the one item of content.

[Expression 1]

$$\Delta \mathrm{E} = \sqrt{(u1' - u0')^2 + (v1' - v0')^2} \ \ldots (1).$$

In the chromaticity diagram of, for example, FIG. 6, as the distance between the point indicating the first chromaticity and the point indicating the second chromaticity increases, the difference in color between first chromaticity and the second chromaticity increases.

In FIG. 7, ΔE12 is the color difference between the original display color (reference) of content and a color changed by the change unit 12 (hereinafter, referred to as a changed color) when the background luminance exceeds B1 in FIG. 5, and ΔE01 is the color difference between the original display color of content and the changed color when the background luminance falls below B1 of FIG. 5.

Note that ΔE01 is the average value of the color differences between the original display color of the content and the changed color when the background luminance is between B0 and B1 in FIG. 5 and the content is displayed with comfortable luminance.

This color difference between the original display color of the content and the color used to actually display the content at the comfort luminance, occurs due to constraints of the hardware of the display device 10.

When the background luminance exceeds B1 in FIG. 5, the change unit 12 changes the display color of the content to satisfy the following expression (2):

$$\Delta \mathrm{E12} > \Delta \mathrm{E01} \ \ldots (2).$$

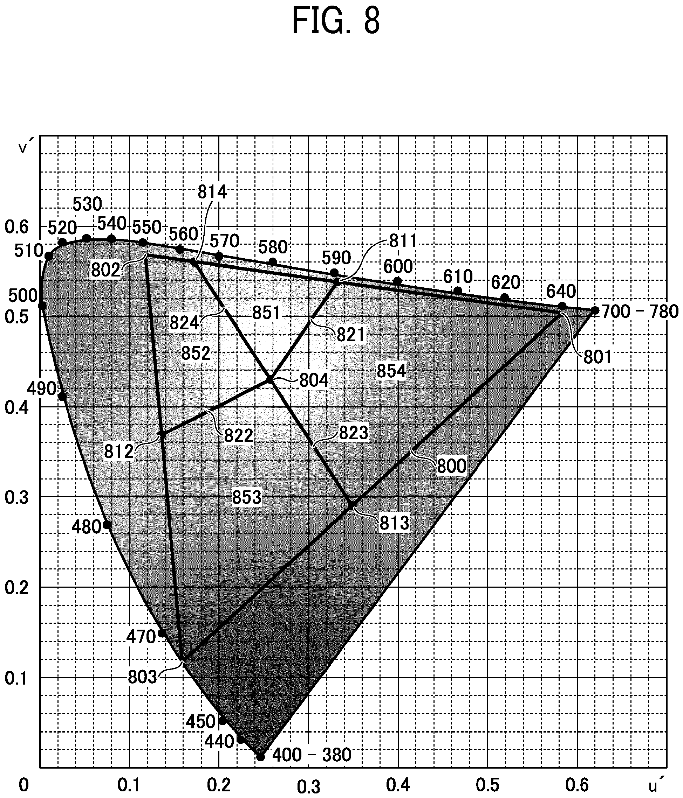

FIG. 8 is a chromaticity diagram that represents changes in colors when content is of a color other than white.

When the laser beams output from the RGB light sources (laser beam sources) 201R, 201G, 201B of the display device 10 have, for example, the wavelengths of 640, 550, 465 nanometer (nm), respectively, the color gamut in which the display device 10 enables content to be displayed is indicated by the triangle 800 in FIG. 8.

The vertexes 801, 802, 803 of the triangle 800 indicate red, green, and blue, respectively.

FIG. 8 indicates a line segment 821 connecting the white point (white chromaticity point) 804 indicating the white color and the midpoint 811 of the vertex 801 and the vertex 802.

In FIG. 8, a line segment 822 connecting a midpoint 812 of the vertex 802 and the vertex 803 and the white point 804 is indicated.

Further, a straight line 823 passing through the white point 804 and the midpoint 813 of the vertex 803 and the vertex 801 is indicated in FIG. 8.

An intersection 814 of the straight line 823 and the line segment 824 connecting the vertex 801 and the vertex 802 is indicated in FIG. 8.

In step S7, the change unit 12 changes the display color according to the following four ranges of the original display color of the content:

(1) A yellow range 851 which is a triangle having the midpoint 811, the white point 804, and the vertex 802 as vertexes;
(2) A green range 852 which is a quadrilateral having the intersection 814, the white point 804, the midpoint 812, and the vertex 802 as vertexes;
(3) A blue range 853 which is a quadrilateral having the midpoint 812, the white point 804, the midpoint 813, and the vertex 803 as vertexes; and
(4) A red range 854 which is a quadrilateral having the midpoint 813, the white point 804, the midpoint 811, and the vertex 801 as vertexes.

That is, the ranges 851 to 854 are ranges that enable recognition of yellow, green, blue, and red, respectively. When the original display color of the content is yellow, green, blue, or red (i.e. the point representing its color in Fig 1 is in the respective range), the change unit 12 changes the display color in a direction away from the white point 804 and within the range 851 to 854, respectively. In this case, the change unit 12 may change the display color of the content to a color farther from the white point 804 on the chromaticity diagram of FIG. 8 as the background luminance increases.

In such a manner, the display color of the content is changed within a range that does not deviate from the original color. This configuration enables the content to be displayed without inhibiting the driver (user) from correctly understanding the meaning of the display color of content such as caution indicated by yellow, safety indicated by green, instruction indicated by blue, and danger indicated by red, which prevents an unnecessary attention of the driver.

Subsequently, the display unit 13 displays the target content with the luminance and color difference changed by the change unit 12 in step S8, and the processing ends.

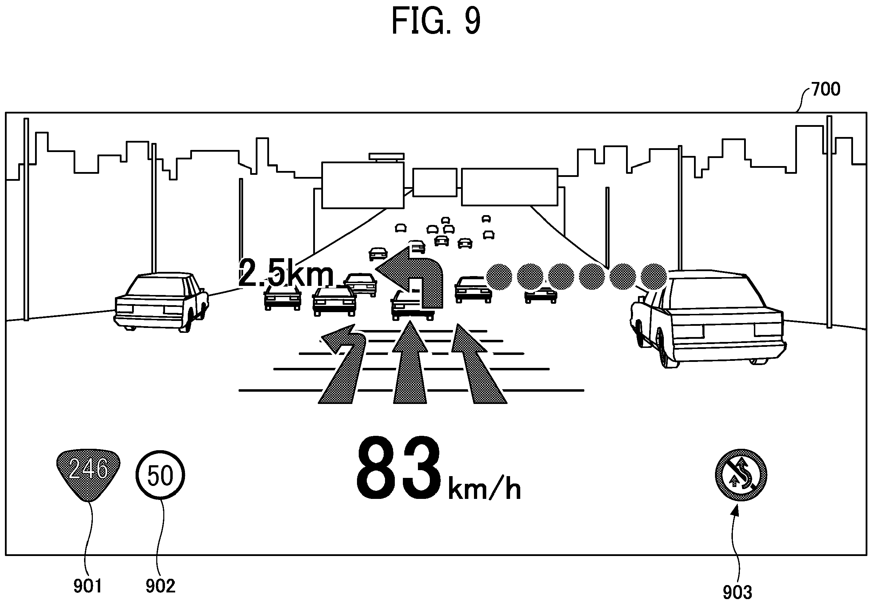

FIG. 9 is an illustration of a display screen 700 of the display device 10 according to an embodiment of the present disclosure. In the example of FIG. 9, the display screen 700 displays a content image indicating road information such as a road name and a speed limit on the bottom of the display area 900 The display device 10 obtains the road information from an on-vehicle navigation device, for example. In the example of FIG. 9, a road-name display image 901, a speed-limit display image 902, and an overtaking prohibition display image 903 are displayed as the road information.

According to "Japanese Industrial Standards (JIS) Safety Color" specified by JIS to ensure safety, red means "danger", yellow means "caution", and green means "safety".

In addition, the basic safety color is universal in the world. In this way, the display color has meaning as an implicit consent.

If the display color of the content is changed with the environment without considering its meaning, the meaning expressed by the content is changed, which might confuse the driver.

For example, suppose that content originally displayed in red (R = 255, G = 0, B = 0) to indicate warning is adjusted based on the RGB components to display yellow (R = 255, G = 255, B = 0).

In this case, the visibility may be improved depending on the background.

However, since the meaning of "yellow" is "caution", the meaning of the content disadvantageously changes.

The configuration according to the present embodiment changes the display color of content within the range of a prescribed chromaticity corresponding to the original content color, which improves the visibility of content and enables the user to properly understand the meaning of the content.

As noted above, an original display color of at least a portion of the image may be changed. The portion of the image may correspond to a portion of the image at which road information is displayed within the image. The road information may be data indicative of properties of the road, and may be based on data extracted from a database of road information based on a location on the road.

When the background brightness is less than the predetermined threshold value, a brightness of the image (e.g. a luminance or illuminance of the image) may be modified (e.g. to be equal to the predetermined threshold value), but the colors of at least one portion, and preferably all portions, of the image are preferably not modified. For example, the color of at least one portion of the image at which road information is displayed is preferably not changed.

Note that there may be a plurality of predetermined chromaticity ranges (e.g. a respective chromaticity range for each of one or more of green, blue, yellow and green, such that the chromaticity range for one of green, blue, yellow or green includes a pure version of that color; preferably the chromaticity range for each of the one or more colors does not include any hue which would be perceived by a human with normal eyesight as one of the other colors). If the original color of the portion of the image falls within one of the predetermined chromaticity ranges, then the changed color of the portion of the image also falls within the same chromaticity range. The chromaticity ranges may each extend on a chromaticity diagram to meet at a point representing the color white. On a chromaticity diagram they may collectively subtend all angles about the point representing the color white.

If the original display color of the portion of the image is white, the corresponding chromaticity range may be a range which extends, according to a predefined chromaticity diagram (such as the International Commission on Illumination/Commission Internationale L'Eclariage (CIE) 1976 UCS chromaticity diagram), further from the point in the diagram corresponding to the color white in a directions towards the color yellow, and in a direction towards the color blue, than in a direction towards the color red or the color green.

Variation

According to a variation of an embodiment of the present disclosure, the change unit 12 changes the display color of only a predetermined type of content among a plurality of pieces of content when the background luminance obtained by the obtaining unit 11 is greater than or equal to the predetermined threshold value.

In this case, the change unit 12 may change the display color only for the content displayed as a virtual image, for example.

This configuration improves the visibility of the content (the virtual image) displayed far from the front windshield 302, for example.

Alternatively, the change unit 12 may change the display color only for content indicating danger or caution such as the overtaking prohibition display image 903 in FIG. 9, for example.

This configuration improves the visibility of, for example, only information relatively important for the driver 300 even when the background luminance is high.

Second Embodiment

Next, a second embodiment is described. In the above-described first embodiment, the cases are described where the change unit 12 changes the original display color of content in a predetermined direction on the chromaticity diagram according to the background luminance.

In the second embodiment, cases are described where the change unit 12 changes the original display color of content in a predetermined direction on the chromaticity diagram according to the background luminance and the background color. The configuration according to the second embodiment improves the visibility of content further.

The same configuration of the first embodiment applies to the second embodiment except for some features, and accordingly the description of the common features is omitted below.

Next, a functional configuration of the display device 10 is described according to the second embodiment of the present disclosure, referring to FIG. 3.

The obtaining unit 11 according to the second embodiment further obtains the background chromaticity.

The change unit 12 according to the second embodiment further changes the display color of content according to the obtained background chromaticity.

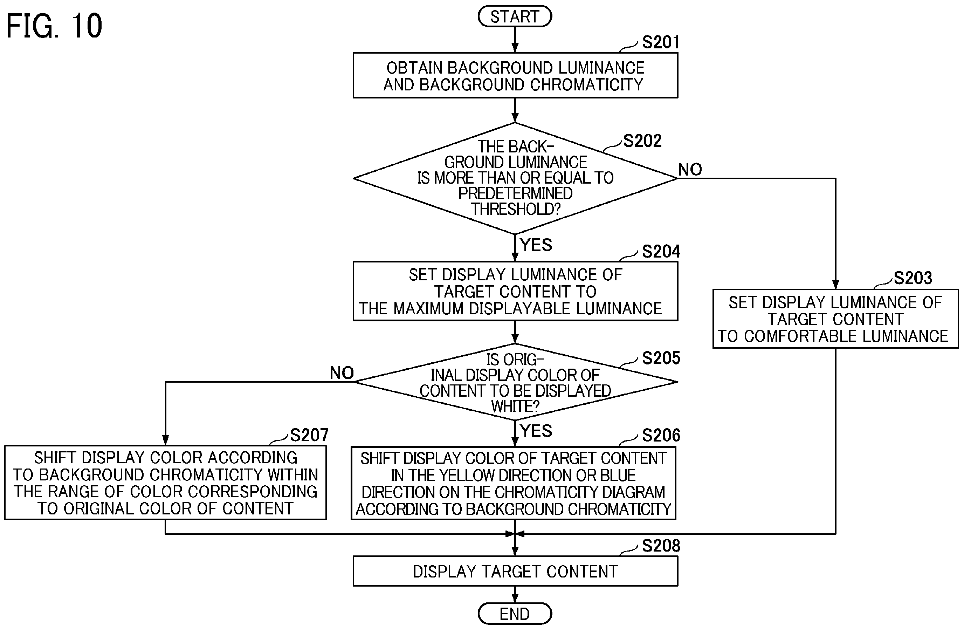

Next, the processing performed by the display device 10 is described according to the second embodiment of the present disclosure, referring to FIG. 10.

FIG. 10 is a flowchart of the processing performed by the display device 10 according to the second embodiment of the present disclosure.

Note that the processing of FIG. 10 may be performed at a periodic timing, for example.

In step S201, the obtaining unit 11 obtains the background luminance and the background chromaticity (color).

In this case, the obtaining unit 11 calculates the background chromaticity corresponding to the position at which a virtual image of content is to be generated, based on the image captured by the camera 30, for example.

The processes in steps S202 through S205 and step S208 are the same as those in steps S2 through S5 and S8 in FIG. 4.

In step S206, the change unit 12 changes the display color of the target content in the yellow direction or the blue direction on the chromaticity diagram, according to the background chromaticity. Subsequently, the processing proceeds to step S208.

In this case, the change unit 12 changes the display color of the content to increase the color difference between the display color of the content and the background chromaticity within the range 602 in the chromaticity diagram of FIG. 6.

For example, if the background is yellowish due to, e.g., sunset, the change unit 12 changes the display color of the content in the blue direction.

In step S207, the change unit 12 changes the display color of the target content according to the background chromaticity, within the (chromaticity) range of the original display color of the content.

In this case, the change unit 12 may change the display color of the content to increase the color difference between the display color of the content and the background chromaticity within the chromaticity range of the original display color of the content, for example.

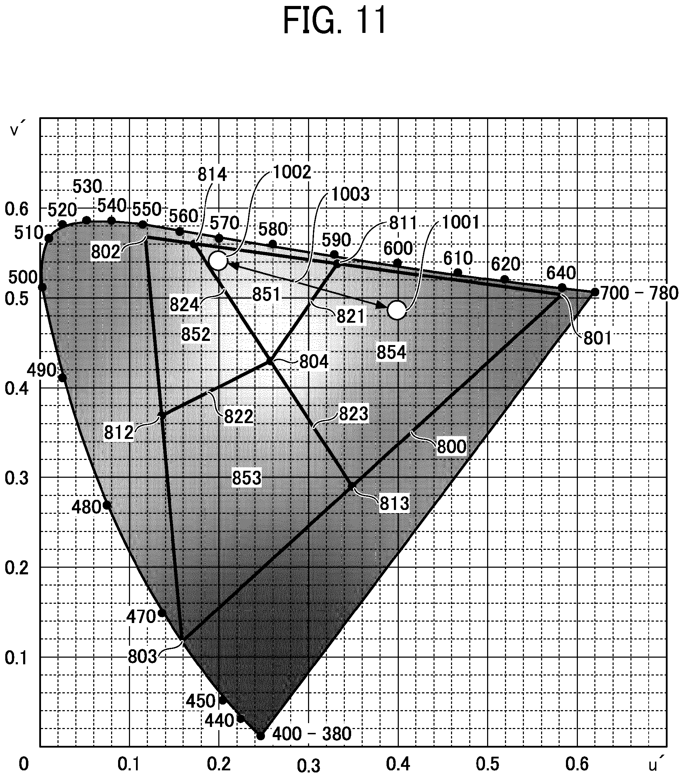

FIG. 11 is a chromaticity diagram for describing changes in display color with the background chromaticity.

In the example of FIG. 11, the change unit 12 changes the display color 1002 of content to increase the color difference 1003 between the display color 1002 of the content and the background chromaticity 1001 within the range 851 of the display color 1002.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

For example, each functional unit of the display device 10 may be realized by cloud computing constituted by one or more computers.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1. An image processing device (10) comprising:

   an obtaining unit (11) to receive a background brightness of an image projected onto a transmission and reflection member; and
   a change unit (12) for generating control data for controlling display unit (13), the change unit (12) being operative to change an original display color of at least a portion of the image within a chromaticity range corresponding to the original display color of the portion of the image, according to the background brightness, wherein a color difference between the original display color and a display color changed by the change unit (12) when the background brightness is greater than or equal to a predetermined threshold value, is greater than a color difference when the background brightness is less than the predetermined threshold value.

2. The image processing device (10) according to claim 1,
   wherein the chromaticity range of the original display color of the portion of the image is a chromaticity range of at least one of red, blue, yellow, and green.

3. The image processing device (10) according to claim 2,
   wherein, when the original color of the portion of the image is red, the change unit (12) changes the original color within the chromaticity range of red.

4. The image processing device (10) according to claim 2,
   wherein, when the original color of the portion of the image is blue, the change unit (12) changes the original color within the chromaticity range of blue.

5. The image processing device (10) according to claim 2,
   wherein, when the original color of the portion of the image is yellow, the change unit (12) changes the original color within the chromaticity range of yellow.

6. The image processing device (10) according to claim 2,
   wherein, when the original color of the portion of the image is green, the change unit (12) changes the original color within the chromaticity range of green.

7. The image processing device (10) according to any of claims 1 through 6,
   wherein, when the background brightness is greater than or equal to the predetermined threshold value and the original display color is white, the change unit (12) changes the original display color in one of a yellow direction and a blue direction within a predetermined chromaticity diagram.

8. The image processing device (10) according to any of claims 1 through 7,
   wherein, when the background brightness is less than the predetermined threshold value, the change unit (12) changes a brightness of the part of the image to a comfortable brightness having a predetermined relationship with the background brightness, wherein the predetermined threshold value is a value at which the comfortable brightness reaches an upper limit of brightness values at which the display unit (13) is capable of displaying the image.

9. The image processing device (10) according to claim 8,
   wherein the predetermined threshold value is variable according to a change in the brightness values at which the display unit (13) is capable of displaying the image.

10. The image processing device (10) according to any of claims 1 through 9,
    wherein the obtaining unit (11) obtains a background color;
    wherein the change unit (12) changes the original color of the part of the image to increase a color difference between the background color and the displayed color changed by the change unit (12).

11. A display system (1) comprising:

    a display unit (13) comprising at least one light source (201R, 201G, and 201B) to emit light for projecting an image;
    a sensor (20) to obtain a background brightness of the image projected onto a transmission and reflection member (302); and
    a calculation unit including:

       an obtaining unit (11) to obtain from a sensor data indicating background brightness;
       a change unit (12) for generating control data for controlling a display unit (13) to display an image, the change unit (12) being operative to change an original display color of at least a portion the image within a range corresponding to the original display color of the portion of the image when the background brightness is greater than a predetermined threshold value,

the calculation unit being arranged to receive data from the sensor and generate control data for controlling the display unit; whereby the display unit (13) causes the light source (201R, 201G, and 201B) to project the image with a color changed by the change unit (12) onto the transmission and reflection member (302).

12. An image processing method comprising:

receiving a background brightness of an image projected onto a transmission and reflection member; and generating control data for controlling display unit (13) to change an original display color of at least a portion of the image within a chromaticity range corresponding to the original display color of the portion of the image, according to the background brightness, wherein a color difference between the original display color and a display color changed by the change unit (12) when the background brightness is greater than or equal to a predetermined threshold value, is greater than a color difference when the background brightness is less than the predetermined threshold value.

13. A carrier medium comprising program instructions operative to cause a processor to perform the image processing method according to claim 12.

# FIG. 1

EP 3 425 617 A1

# FIG. 2

<u>10</u>

# FIG. 3

FIG. 4

START

S1
OBTAIN LUMINANCE

S2
THE BACK-
GROUND LUMINANCE
IS MORE THAN OR EQUAL TO
PREDETERMINED
THRESHOLD?

NO

YES

S4
SET DISPLAY LUMINANCE OF TARGET
CONTENT TO THE MAXIMUM
DISPLAYABLE LUMINANCE

S3
SET DISPLAY LUMINANCE OF
TARGET CONTENT TO
COMFORTABLE LUMINANCE

S5
IS ORIGINAL
DISPLAY COLOR OF CONTENT
TO BE DISPLAYED
WHITE?

NO

YES

S7
SHIFT DISPLAY COLOR IN DIRECTION
AWAY FROM THE WHITE WITHIN THE
RANGE OF COLOR CORRESPONDING
TO ORIGINAL COLOR OF CONTENT

S6
SHIFT DISPLAY COLOR OF
TARGET CONTENT IN THE YELLOW
DIRECTION OR BLUE DIRECTION
ON THE CHROMATICITY DIAGRAM

S8
DISPLAY TARGET CONTENT

END

EP 3 425 617 A1

# FIG. 5

# FIG. 6

# FIG. 7

# FIG. 8

FIG. 9

EP 3 425 617 A1

FIG. 10

START

S201
OBTAIN BACKGROUND LUMINANCE
AND BACKGROUND CHROMATICITY

S202
THE BACK-
GROUND LUMINANCE
IS MORE THAN OR EQUAL TO
PREDETERMINED
THRESHOLD?

NO

YES

S204
SET DISPLAY LUMINANCE OF
TARGET CONTENT TO
THE MAXIMUM DISPLAYABLE LUMINANCE

S203
SET DISPLAY LUMINANCE OF
TARGET CONTENT
TO COMFORTABLE LUMINANCE

S205
IS ORIG-
INAL DISPLAY COLOR OF
CONTENT TO BE DISPLAYED
WHITE?

NO

YES

S207
SHIFT DISPLAY COLOR ACCORDING
TO BACKGROUND CHROMATICITY WITHIN
THE RANGE OF COLOR CORRESPONDING
TO ORIGINAL COLOR OF CONTENT

S206
SHIFT DISPLAY COLOR OF TARGET CONTENT
IN THE YELLOW DIRECTION OR BLUE
DIRECTION ON THE CHROMATICITY DIAGRAM
ACCORDING TO BACKGROUND CHROMATICITY

S208
DISPLAY TARGET CONTENT

END

# FIG. 11

Europäisches
Patentamt

European
Patent Office

Office européen
des brevets

## EUROPEAN SEARCH REPORT

Application Number

EP 18 18 1941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/043354 A1 (CHOI SANG-HYUN [KR] ET AL) 13 February 2014 (2014-02-13) * paragraphs [0055], [0056], [0073] - [0076], [0084] - [0087], [0090] - [0097]; figures 1,2,7 * | 1-13 | INV.<br>G09G3/00<br>G03B21/00<br>G09G3/20<br>G09G5/02<br>G09G5/10<br>H04N5/74<br>H04N9/31 |
| X | WO 2017/028544 A1 (HUIZHOU TCL MOBILE COMMUNICATION CO LTD [CN]) 23 February 2017 (2017-02-23) * abstract * -& US 2017/256235 A1 (WANG RUI [CN] ET AL) 7 September 2017 (2017-09-07) * paragraphs [0026] - [0036], [0048] - [0051], [0079] - [0084]; figures 1,2 * | 1-6, 10-13 | |

TECHNICAL FIELDS
SEARCHED    (IPC)

G09G
G03B
H04N

The present search report has been drawn up for all claims

| Place of search | Date of completion of the search | Examiner |
|---|---|---|
| Munich | 26 October 2018 | Demin, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 3 425 617 A1

**ANNEX TO THE EUROPEAN SEARCH REPORT
ON EUROPEAN PATENT APPLICATION NO.**

EP 18 18 1941

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2018

| Patent document cited in search report | | | Publication date | Patent family member(s) | | | Publication date |
|---|---|---|---|---|---|---|---|
| US 2014043354 | A1 | | 13-02-2014 | KR | 20140022237 | A | 24-02-2014 |
| | | | | US | 2014043354 | A1 | 13-02-2014 |
| | | | | US | 2016284261 | A1 | 29-09-2016 |
| WO 2017028544 | A1 | | 23-02-2017 | CN | 105070269 | A | 18-11-2015 |
| | | | | US | 2017256235 | A1 | 07-09-2017 |
| | | | | WO | 2017028544 | A1 | 23-02-2017 |
| US 2017256235 | A1 | | 07-09-2017 | CN | 105070269 | A | 18-11-2015 |
| | | | | US | 2017256235 | A1 | 07-09-2017 |
| | | | | WO | 2017028544 | A1 | 23-02-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015178297 A